# EUROPEAN PATENT APPLICATION

(11) **EP 2 001 214 A2**
(43) Date of publication of application: **10.12.2008**
(21) Application number: 07739424.5
(22) Date of filing: 23.03.2007
(51) Int. Cl.: H04M 11/00, H04B 7/26

(54) **TRANSPORTABLE TYPE BASE STATION DEVICE AND TERMINAL DEVICE**

(30) Priority: 24.03.2006 JP 2006083660
(71) Applicant: NTT DoCoMo, Inc., Chiyoda-ku Tokyo 100-6150 (JP)
(72) Inventor: NATSUNO, Takeshi Intellectual Property Dpt., Chiyoda-ku Tokyo 100-6150 (JP); KANO, Izua Intellectual property Dpt., Chiyoda-ku Tokyo 1006-150 (JP); YAMADA, Kazuhiro Intellectual Property Dpt., Chiyoda-ku Tokyo 1006-150 (JP)
(74) Representative: Viering, Jentschura & Partner
(86) International application number: PCT/JP2007/055983
(87) International publication number: WO 2007/111240

(57) **Abstract**

This invention provides a mobile base station device which can simplify the setting of internal functions, as well as a portable terminal used in operation of such a mobile base station device. In a mobile base station device 1 and a portable terminal 2, when the portable terminal 2 is physically connected to the mobile base station device 1 by means of a dedicated USB cable 6, one screen information item conforming to the type and browser of the portable terminal 2 is transmitted to the portable terminal 2, and a configuration settings screen for the mobile base station device 1 is displayed in the browser of the portable terminal 2. In this way, in the mobile base station device 1 and portable terminal 2, merely by physically connecting the mobile base station device 1 and portable terminal 2, a configuration settings screen can automatically be accessed, so that an environment which enables simple setting of configuration settings of the mobile base station device 1 can be provided to various kinds of users.

## Description

### Technical Field

This invention relates to a mobile base station device, installed primarily within a home, for relaying communication between a portable terminal and a network, and to a portable terminal connected to such a mobile base station device.

### Background Art

With the spread of portable terminals in recent years, development of mobile base station devices which can easily be installed as access points for portable terminals has been conducted (see for example Patent Reference 1). If such mobile base station devices come into widespread use in homes and various other locations, communication areas for portable terminals can be broadened, and in addition, in future it can be expected that such devices will function to provide home services connecting household appliances within the home. Patent Reference 1: Japanese Patent Laid-open No. 6-311099

### Disclosure of the Invention

### Problems to be Solved by the Invention

In promoting the spread of mobile base station devices in homes and elsewhere, technology is sought which provides users with an environment enabling simple setting of the internal functions of such devices, in order to accommodate an expanded range of users.

This invention was devised in order to resolve the above problem, and has as an object the provision of a mobile base station device which can simplify the setting of internal functions, as well as a portable terminal which can be used in operation of such a mobile base station device.

### Means for Solving the Problems

In order to resolve this problem, a mobile base station device of this invention is a mobile base station device comprising a connection interface which can be physically connected to a portable terminal, further comprising type-specific information reception means for receiving type-specific information for specifying the type of portable terminal from the portable terminal, upon physical connection at the connection interface; screen information storage means for storing, in advance for each type of the portable terminal, screen information for displaying a settings screen of the mobile base station device; screen information selection means for selecting one screen information item corresponding to the type of the portable terminal, from among the screen information items stored in the screen information storage means, based on type-specific information; and screen information transmission means for transmitting one screen information item selected by the screen information selection means, to the portable terminal.

In this mobile base station device, screen information is stored in advance by portable terminal type, and screen information for a settings screen is transmitted to a portable terminal which is physically connected, according to the type of the portable terminal. Hence in the case of this mobile base station device, simply by physically connecting a portable terminal using a cable or similar, a settings screen can be accessed automatically, so that an environment which enables simple setting of internal functions of the mobile base station device can be provided to various kinds of users

Also, it is preferable that a mobile base station device further comprise terminal-specific information reception means for receiving terminal-specific information for specifying a portable terminal, together with reception of type-specific information; terminal-specific information storage means for storing terminal-specific information for specifying the portable terminal of a registered user registered in advance; and user judgment means for judging whether the terminal-specific information received by the terminal-specific information reception means coincides with the terminal-specific information stored in the terminal-specific information storage means, and that when the terminal-specific information received by the terminal-specific information reception means is judged by the user judgment means to coincide with the terminal-specific information stored in the terminal-specific information storage means, the screen information transmission means transmits one screen information item to the portable terminal. By performing user authentication in this way on the side of the mobile base station device, illicit operations such as by user impersonation and similar can be prevented, while simplifying settings for the mobile base station device.

Also, a portable terminal of this invention is a portable terminal comprising a connection interface which can be physically connected to a mobile base station device, further comprising type-specific information transmission means for transmitting type-specific information for specifying the type of the portable terminal to the mobile base station device, upon physical connection at the connection interface; screen information reception means for receiving, from the mobile base station device, screen information for displaying a settings screen of the mobile base station device, in response to transmission of type-specific information; and display means for displaying a settings screen based on the screen information.

In this portable terminal, type-specific information is transmitted to the physically connected mobile base station device, and screen information to display a settings screen of the mobile base station device is received from the mobile base station device. Hence simply by physically connecting this portable terminal via a cable or similar to the mobile base station device, a settings screen can be automatically accessed, so that an environment which enables simple setting of internal functions of the mobile base station device can be provided to various kinds of users.

Also, it is preferable that the portable terminal further comprise settings information acquisition means for acquiring settings information to be input to the settings screen from a network, when the screen information is received. As a result, user-side operations can be further simplified.

### Effects of the Invention

As explained above, by means of a mobile base station device and portable terminal of this invention, setting of internal functions can easily be performed. By this means, various kinds of users can be accommodated when promoting the spread of mobile base station devices in homes and similar.

### Brief Description of the Drawings

Fig. 1 is a perspective view showing an aspect of a mobile base station device and portable terminal of the invention.
Fig. 2 shows functional constituent elements of the mobile base station device and portable terminal shown in Fig. 1.
Fig. 3 shows an example of information stored in the screen information storage portion.
Fig. 4 is a sequence diagram showing operation of the mobile base station device and portable terminal shown in Fig. 1.
Fig. 5 shows an example of a configuration settings screen.
Fig. 6 shows an example of a configuration settings screen at the time of initial settings.

### Explanation of Reference Numerals

- 1: Mobile base station device
- 2: Portable terminal
- 5A, 5B: USB port
- 20: Base station device UIM
- 101: Device-specific information transmission portion
- 102: Type-specific information reception portion
- 103: User authentication portion
- 106: Screen information selection portion
- 107: Screen information storage portion
- 108: Screen information transmission portion
- 201: Device-specific information reception portion
- 202: Type-specific information transmission portion
- 204: Browser control portion
- 205: Display portion
- 206: Settings information acquisition portion
- N: Network

### Best Mode for Carrying Out the Invention

Below, preferred aspects of a mobile base station device and portable terminal of this invention are explained in detail, referring to the drawings.

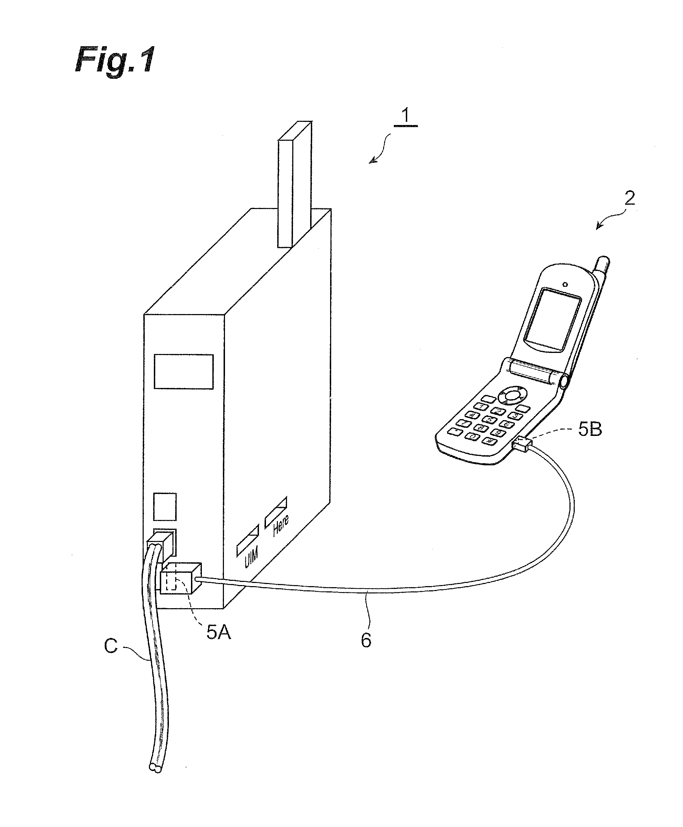

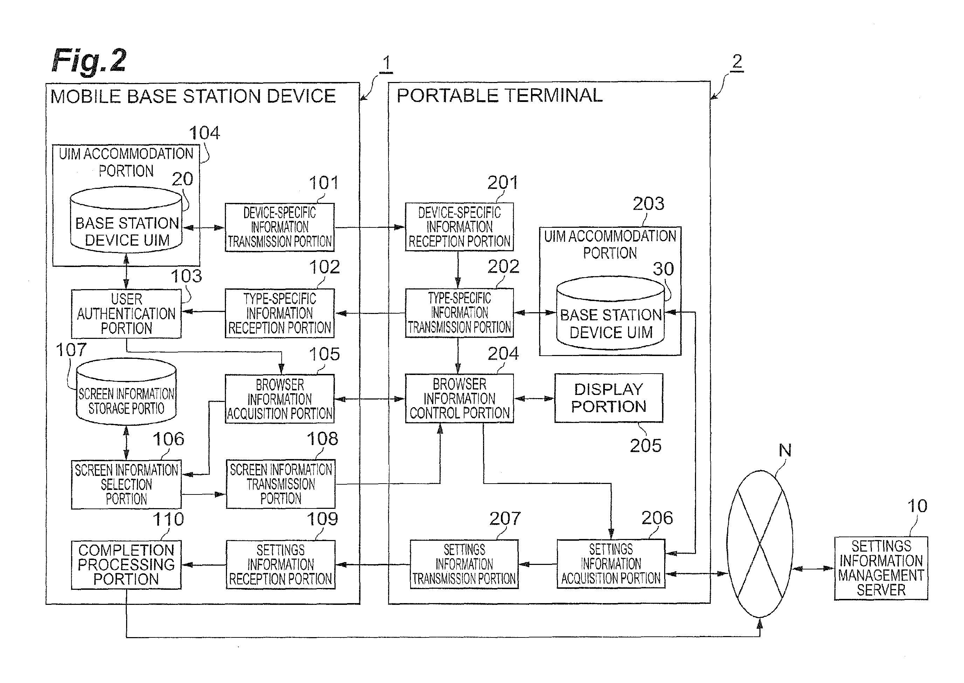

Fig. 1 is a perspective view showing in summary a mobile base station device and portable terminal of the invention. Fig. 2 shows the configuration of the mobile base station device and portable terminal shown in Fig. 1. The mobile base station device 1 shown in Fig. 1 and Fig. 2 is installed primarily in homes, and is configured as a device which functions as an access point for portable terminals. The mobile base station device 1 and network N are connected so as to enable data communication with the network N via for example a WAN cable C. The network N is connected to a settings information management server 10, managed by a communication enterprise which provides communication services for portable terminals 2 by means of the mobile base station device 1.

The portable terminal 2 is a portable terminal belonging to a mobile communication network (not shown), established by the communication enterprise which provides the communication services via the mobile base station device 1, for example, and is a terminal used to confirm and manipulate configuration settings information for the mobile base station device 1.

As shown in Fig. 1, the mobile base station device 1 and portable terminal 2 respectively comprise common USB ports (connection interfaces) 5A and 5B. A dedicated USB cable 6, standardized for example by the aforementioned communication enterprise, can be physically connected to the USB ports 5A and 5B; and the mobile base station device 1 and portable terminal 2 are configured so as to enable data communication via the dedicated USB cable 6. Below, constituent components are explained in detail.

First, the configuration of the mobile base station device 1 is explained.

The mobile base station device 1 is a computer system which physically comprises a CPU (central processing unit), memory or other storage device, display device, and similar. The mobile base station device 1 comprises, as functional constituent elements, a device-specific information transmission portion (device-specific information transmission means) 101; type-specific information reception portion (type-specific information reception means, terminal-specific information reception means) 102; user authentication portion (user judgment means) 103; UIM accommodation portion 104; browser information acquisition portion 105; screen information selection portion (screen information selection means) 106; screen information storage portion (screen information storage means) 107; screen information transmission portion (screen information transmission means) 108; settings information reception portion 109; and completion processing portion 110.

The device-specific information transmission portion 101 is a portion which transmits to a portable terminal 2 a base station ID (device-specific information), specifying the mobile base station device 1. When the portable terminal 2 is connected vi a dedicated USB cable 6, the device-specific information transmission portion 101 reads the base station ID from a base station device UIM (terminal-specific information storage means) 20 accommodated by the UIM accommodation portion 104, and transmits the base station ID to the portable terminal 2.

The type-specific information reception portion 102 is a portion which receives type name information (type-specific information) indicating the type of the portable terminal 2 from the portable terminal 2, in response to transmission of the base station ID. The type-specific information reception portion 102 also receives, together with type name information, a user ID and telephone number (terminal-specific information) from the portable terminal 2. The type-specific information reception portion 102 outputs the received information to the user authentication portion 103.

The user authentication portion 103 is a portion which performs user authentication of the portable terminal 2. The user authentication portion 103 references the base station device UIM 20, based on the user ID and telephone number received from the type-specific information reception portion 102, and judges whether the user of the portable terminal 2 is a registered user registered in advance in the base station device UIM 20. Upon judging that the user of the portable terminal 2 is a registered user, the user authentication portion 103 outputs type name information to the browser information acquisition portion 105. And, upon judgment that the user of the portable terminal 2 is not a registered user, the user authentication portion 103 notifies the portable terminal 2 of this result.

The browser information acquisition portion 105 is a portion which acquires details of browser information for the portable terminal 2. More specifically, upon receiving type name information from the user authentication portion 103, the browser information acquisition portion 105 transmits to the portable terminal 2 browser startup request information, requesting startup of the browser in order to display a configuration settings screen for the mobile base station device 1. And, in response to transmission of browser startup request information, the browser information acquisition portion 105 receives from the portable terminal 2 UA (user agent) information, indicating the display area of the browser, the file format, the maximum data size, and similar. The browser information acquisition portion 105 outputs to the screen information selection portion 106 the received UA information, together with the type name information.

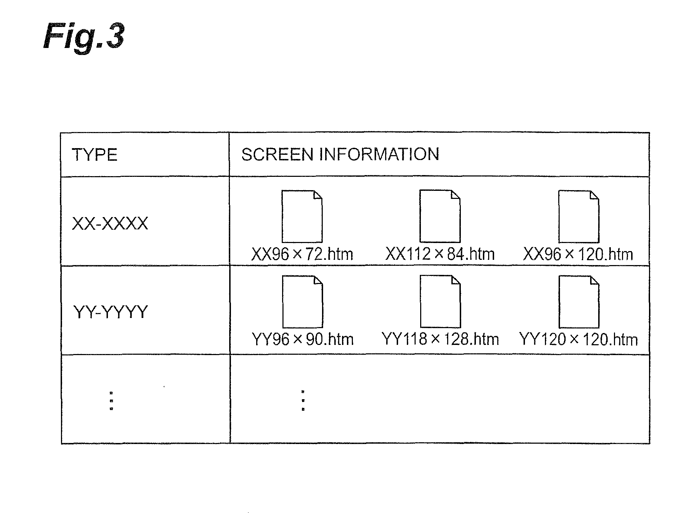

The screen information selection portion 106 is a portion which selects one screen information item corresponding to the browser of the portable terminal 2, from among the screen information items stored in the screen information storage portion 107, based on the type name information and UA information received from the browser information acquisition portion 105. Fig. 3 shows an example of screen information stored in the screen information storage portion 107. As shown in Fig. 3, screen information to display configuration settings screens for the mobile base station device 1 is displayed, for each screen size and in association with portable terminal types, in the screen information storage portion 107.

That is, the screen information storage portion 107 stores, for type "XX-XXXX", screen information "XX96 × 72.htm" for a 96 × 72 size screen, screen information "XX112 × 84.htm" for a 112 × 84 size screen, and screen information "XX96 × 120.htm" for a 96 × 120 size screen, and, for another type "YY-YYYY", screen information "YY96 × 90.htm" for a 96 × 90 size screen, screen information "YY118 × 128.htm" for a 118 × 128 size screen, and screen information "YY120 × 120.htm" for a 120 × 120 size screen. The screen information selection portion 106 outputs the one selected screen information item to the screen information transmission portion 108. The screen information transmission portion 108 transmits the one screen information item received from the screen information selection portion 106 to the portable terminal 2.

The settings information reception portion 109 is a portion which receives settings information related to configuration settings from the portable terminal 2. The settings information reception portion 109 outputs received settings information to the completion processing portion 110. Upon receiving settings information, the completion processing portion 110 generates encryption key information associated with the settings information. Then, the completion processing portion 110 transmits the generated encryption key information to the settings information management server 10.

Next, the configuration of the portable terminal 2 is explained.

The portable terminal 2 is a portable telephone set comprising a CPU (Central Processing Unit), memory or other storage device, push-buttons or other input device, and similar. The portable terminal 2 comprises, as functional constituent elements, a device-specific information reception portion (device-specific information reception means) 201; type-specific information transmission portion (type-specific information transmission means) 202; UIM accommodation portion 203; browser control portion (screen information reception means) 204; display portion (display means) 205; settings information acquisition portion (settings information acquisition means) 206; and settings information transmission portion 207.

The device-specific information reception portion 201 is a portion which receives a base station ID from the mobile base station device 1. The device-specific information reception portion 201 outputs the received base station ID to the type-specific information transmission portion 202.

The type-specific information transmission portion 202 is a portion which transmits type-specific information for the portable terminal 2 to the mobile base station device 1 in response to reception of the base station ID. After the base station device 1 has been authenticated based on the base station ID received from the device-specific information reception portion 201, the type-specific information transmission portion 202 references the portable terminal UIM 30 accommodated by the UIM accommodation portion 203, and acquires type name information, a user ID, and the telephone number of the portable terminal 2. The type-specific information transmission portion 202 transmits these information items to the mobile base station device 1. Also, the type-specific information transmission portion 202 outputs the base station ID to the browser control portion 204.

The browser control portion 204 is a portion which controls the display portion 205, which displays a settings screen. The browser control portion 204 receives browser startup request information transmitted from the mobile base station device 1 in response to transmission of information items by the type-specific information transmission portion 202, and causes startup of the browser on the display portion 205. The browser control portion 204 transmits UA information for the started-up browser to the mobile base station device 1.

The browser control portion 204 receives screen information transmitted from the mobile base station device 1 in response to transmission of UA information. Based on the received screen information, the browser control portion 204 causes display of the configuration settings screen in the browser on the display portion 205. An example of items displayed by the configuration settings screen is explained below. When acquisition instruction information is input, instructing acquisition of settings information to be input to the configuration settings screen via the configuration settings screen, the browser control portion 204 outputs the acquisition instruction information to the settings information acquisition portion 206, together with the base station ID.

The settings information acquisition portion 206 is a portion which acquires settings information for the portable terminal 2 from the settings information management server 10. Upon receiving acquisition instruction information and the base station ID from the browser control portion 204, the settings information acquisition portion 206 transmits transmission request information, requesting transmission of settings information, to the settings information management server 10.

The settings information acquisition portion 206 transmits to the settings information management server 10, together with transmission request information, the base station ID and user ID. And, the settings information acquisition portion 206 receives settings information transmitted from the settings information management server 10 in response to the transmission of these information items, and outputs this settings information to the settings information transmission portion 207. The settings information transmission portion 207 transmits the settings information received from the settings information acquisition portion 206 to the mobile base station device 1.

The settings information management server 10 is explained below.

The settings information management server10 is a computer system which physically comprises a CPU (Central Processing Unit), memory or other storage device, display device, and similar, and is a server which manages settings information for each user subscribing to communication services provided via the mobile base station device 1. Upon receiving transmission request information, a base station ID, and a user ID from the portable terminal 2, the settings information management server 10 performs user authentication based on the ID information.

Upon completing user authentication, the settings information management server 10 transmits settings information for the portable terminal 2 to the portable terminal 2. Also, upon receiving encryption key information from the mobile base station device 1, the settings information management server 10 stores this encryption key information in association with settings information for the portable terminal 2. Then, the settings information management server 10 notifies both the mobile base station device 1 and the portable terminal 2 of the completion of settings.

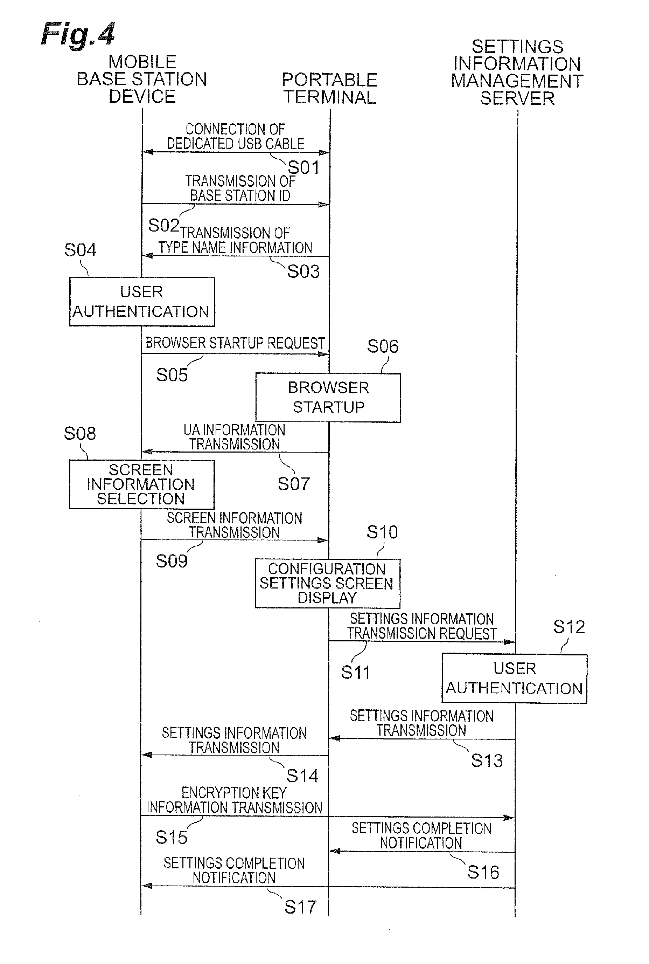

Next, operation of a mobile base station device 1 and a portable terminal 2, configured as described above, is explained, referring to the sequence diagram of Fig. 4.

As shown in Fig. 4, when to begin with the mobile base station device 1 and portable terminal 2 are physically connected by a dedicated USB cable 6 (step S01), the base station ID is transmitted from the mobile base station device 1 to the portable terminal 2 (step S02). Based on the received base station ID, the portable terminal 2 authenticates the mobile base station device 1, and then transmits to the mobile base station device 1 type name information, a user ID, and a telephone number (step S03).

Based on the received user ID and telephone number, the mobile base station device 1 performs user authentication of the portable terminal 2 (step S04). After completion of user authentication, the mobile base station device 1 transmits browser startup request information to the portable terminal 2 (step S05). Upon receiving browser startup request information, the portable terminal 2 starts up the browser on the display portion 205 (step S06), and UA information for this browser is transmitted from the portable terminal 2 to the mobile base station device 1 (step S07).

After step S07, in the mobile base station device 1, screen information selection is performed based on the type name information and UA information (step S08). One selected screen information item is transmitted to the portable terminal 2 (step S09), and a configuration settings screen is displayed in the browser of the portable terminal 2 (step S 10).

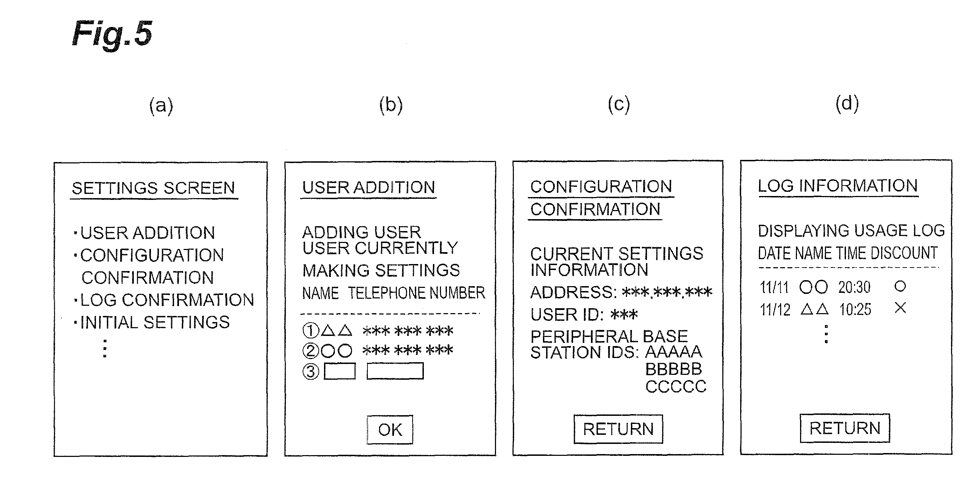

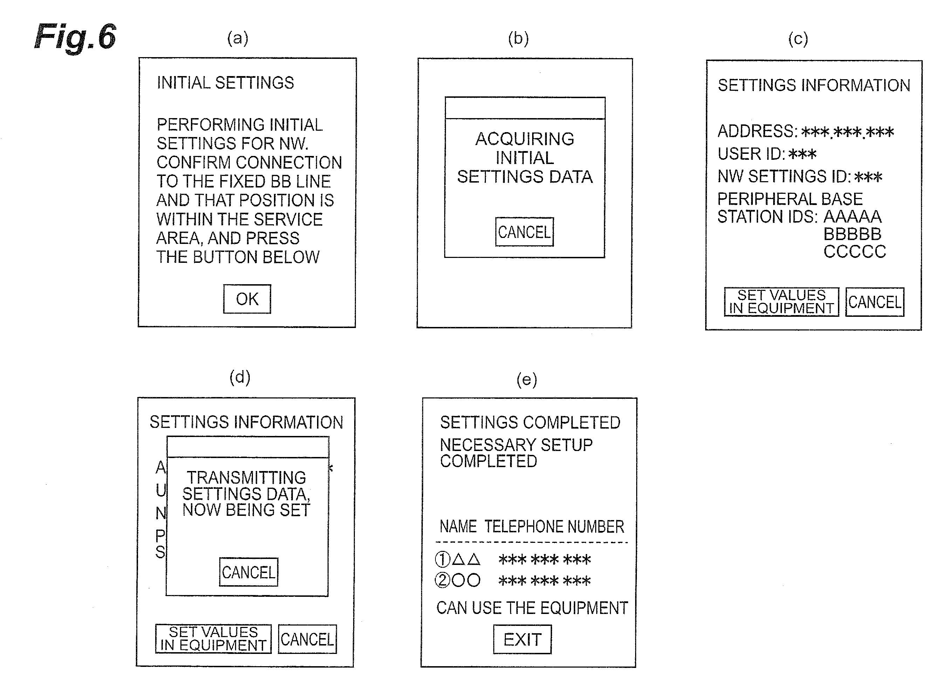

Examples of configuration settings screens appear in Fig. 5 and Fig. 6. In the example shown in (a) of Fig. 5, the items "user addition", "configuration confirmation", "log confirmation", and "initial settings" are displayed. Upon selecting the item "user addition", the message "Adding user" is displayed, as well as the name "ΔΔ" and telephone number "********" of the user currently making the settings, and boxes are displayed in the bottom-most row, into which to input the name and telephone number of the user to be added, as shown in (b) of Fig. 5.

When the "Configuration confirmation" item is selected, as shown in (c) of Fig. 5, together with the message "Current settings information", the address "***.***.***", user ID "***", NW settings ID "***", and three peripheral base station IDs "AAAAA", "BBBBB", and "CCCCC" are displayed. When the "log information" items is selected, as shown in (d) of Fig. 5, together with the message "Displaying usage log", the date "11/11", name "OO", time "20:30", and discount information "O(yes)" are displayed.

When on the other hand the "initial settings" item is selected, as shown in (a) of Fig. 6, the confirmation message "Performing initial settings for NW. Confirm connection to the fixed BB line and that position is within the service area, and press the button below" is displayed, and therebelow an "OK" button is displayed. When the user performs an operation to press the "OK" button, settings information, which is transmission request information, base station ID, and user ID, is transmitted from the portable terminal 2 to the settings information management server 10 (step S11). At this time, as for example shown in (b) of Fig. 6, the message "Acquiring initial settings data", as well as a "Cancel" button, are displayed on the browser of the portable terminal 2.

When transmission request information, a base station ID, and a user ID are transmitted, the settings information management server 10 performs user authentication based on the ID information (step S12), and after completion of user authentication, transmits settings information to the portable terminal 2 (step S13). As a result, as for example shown in (c) of Fig. 6, the address "***.**.***", user ID "***", NW settings ID "***", and three peripheral base station IDs "AAAAA", "BBBBB", and "CCCCC" are displayed, and therebelow a "Set values in equipment" button and a "Cancel" button are displayed on the browser of the portable terminal 2.

When the user performs an operation to press the "Set values in equipment" button, settings information is transmitted from the portable terminal 2 to the mobile base station device 1 (step S14). During this interval, for example a "Transmitting settings data, now being set" message is displayed in the browser of the portable terminal 2, as shown in (d) of Fig. 6. After receiving settings information, the mobile base station device 1 transmits encryption key information to the settings information management server 10 (step S 15).

Upon receiving encryption key information, the settings information management server 10 stores the encryption key in association with settings information for the portable terminal 2, and in addition transmits settings completion notification to the mobile base station device 1 and portable terminal 2 (step S16, step S17). In the browser of the portable terminal 2, the message "Necessary setup completed", as well as the name "ΔΔ" and telephone number "********" of the current user performing the settings, and an "Exit" button, are displayed, as shown in (e) of Fig. 6. When the user presses the "Exit" button, setting of configuration settings is completed.

As explained above, in a mobile base station device 1 and a portable terminal 2, when a dedicated USB cable 6 is used to connect the mobile base station device 1 and the portable terminal 2, one screen information item conforming to the type and browser of the portable terminal 2 are transmitted to the portable terminal 2, and a configuration settings screen for the mobile base station device 1 is displayed in the browser of the portable terminal 2. In this way, in the mobile base station device 1 and the portable terminal 2, merely by physically connecting the mobile base station device 1 and the portable terminal 2, a configuration settings screen can automatically be accessed, so that an environment which enables simple setting of configuration settings of the mobile base station device 1 can be provided to various kinds of users.

Moreover, in the mobile base station device 1, a screen information item is transmitted to a portable terminal 2, only in cases in which the user of the portable terminal 2 is a registered user registered in advance in the base station device UIM 20. Hence while simplifying settings of the mobile base station device, illicit operations through user impersonation or other means can be prevented.

On the other hand, in the portable terminal 2, upon receiving screen information, settings information to be input to a configuration settings screen is acquired from the settings information management server 10. As a result, user-side operations relating to input of settings information can be further simplified.

This invention is not limited to the above aspects. For example, screen information stored in the mobile base station device 1 is not limited to the htm format, and a text format, Flash format, or various other file formats can be applied, according to the performance of the browser of the portable terminal 2. Also, means may be provided in the mobile base station device 1 for downloading screen information from the network N, so that screen information can be updated.

In setting initial settings of the configuration settings screen, settings information need not necessarily be received from the settings information management server 10, and manual input from a user may be received. In this case, even when for example the portable terminal 2 is at a position outside the service area, settings information for the mobile base station device 1 can be manipulated.

### Industrial Applicability

By means of a mobile base station device and portable terminal of this invention, internal function settings can be performed by simple means. As a result, various kinds of users can be accommodated when promoting the spread of mobile base station devices in homes and similar.

## Claims

1. A mobile base station device, comprising a connection interface which can be physically connected to a portable terminal, further comprising:
type-specific information reception means for receiving type-specific information for specifying the type of said portable terminal from said portable terminal, upon physical connection at said connection interface;
screen information storage means for storing, in advance for each type of said portable terminal, screen information for displaying a settings screen of the mobile base station device;
screen information selection means for selecting one screen information item corresponding to the type of said portable terminal, from among the screen information items stored in said screen information storage means, based on said type-specific information; and
screen information transmission means for transmitting said one screen information item selected by said screen information selection means, to said portable terminal.

2. The mobile base station device according to Claim 1, further comprising:
terminal-specific information reception means for receiving terminal-specific information for specifying said portable terminal, together with reception of said type-specific information;
terminal-specific information storage means for storing terminal-specific information for specifying the portable terminal of a registered user registered in advance; and
user judgment means for judging whether said terminal-specific information received by said terminal-specific information reception means coincides with the terminal-specific information stored in said terminal-specific information storage means, and
**characterized in that** when said terminal-specific information received by said terminal-specific information reception means is judged by said user judgment means to coincide with the terminal-specific information stored in said terminal-specific information storage means, said screen information transmission means transmits said one screen information item to said portable terminal.

3. A portable terminal, comprising a connection interface which can be physically connected to a mobile base station device, further comprising:
type-specific information transmission means for transmitting type-specific information for specifying the type of the portable terminal to said mobile base station device, upon physical connection at said connection interface;
screen information reception means for receiving, from said mobile base station device, screen information for displaying a settings screen of said mobile base station device, in response to transmission of said type-specific information; and
display means for displaying said settings screen based on said screen information.

4. The portable terminal according to Claim 3, further comprising settings information acquisition means for acquiring settings information to be input to said settings screen from a network, when said screen information is received.
